# EUROPEAN PATENT SPECIFICATION

(11) **EP 4 182 886 B1**
(45) Date of publication and mention of the grant of the patent: **31.07.2024**
(21) Application number: 20845426.4
(22) Date of filing: 16.12.2020
(51) Int. Cl.: G06T 7/12, G06T 7/168

(54) **METHOD, DATA PROCESSING SYSTEM, COMPUTER PROGRAM PRODUCT AND COMPUTER READABLE MEDIUM FOR OBJECT SEGMENTATION**
VERFAHREN, DATENVERARBEITUNGSSYSTEM, COMPUTERPROGRAMMPRODUKT UND COMPUTERLESBARES MEDIUM ZUR OBJEKTSEGMENTIERUNG
PROCÉDÉ, SYSTÈME DE TRAITEMENT DE DONNÉES, PRODUIT-PROGRAMME INFORMATIQUE ET SUPPORT LISIBLE PAR ORDINATEUR POUR LA SEGMENTATION D'OBJETS

(30) Priority: 17.07.2020 HU 2000238
(43) Date of publication of application: 24.05.2023
(73) Proprietor: aiMotive Kft., 1025 Budapest (HU)
(72) Inventor: UTASI, Ákos, 2131 Göd (HU); BUTYKAI, Ádám, 1191 Budapest (HU)
(74) Representative: Kereszty, Marcell
(86) International application number: PCT/HU2020/050059
(87) International publication number: WO 2022/013584

(56) References cited:
- NURI BENBARKA ET AL: "FourierNet: Compact mask representation for instance segmentation using differentiable shape decoders", ARXIV.ORG, CORNELL UNIVERSITY LIBRARY, 201 OLIN LIBRARY CORNELL UNIVERSITY ITHACA, NY 14853, 7 February 2020 (2020-02-07), XP081593923
- CHARMI ET AL: "Fourier-based geometric shape prior for snakes", PATTERN RECOGNITION LETTERS, ELSEVIER, AMSTERDAM, NL, vol. 29, no. 7, 26 January 2008 (2008-01-26), pages 897 - 904, XP022549883, ISSN: 0167-8655
- STAIB L H ET AL: "BOUNDARY FINDING WITH PARAMETRICALLY DEFORMABLE MODELS", IEEE TRANSACTIONS ON PATTERN ANALYSIS AND MACHINE INTELLIGENCE, IEEE COMPUTER SOCIETY, USA, vol. 14, no. 11, 1 November 1992 (1992-11-01), pages 1061 - 1075, XP000327680, ISSN: 0162-8828, DOI: 10.1109/34.166621
- ANDR\'E PETER KELM ET AL: "Walk the Lines: Object Contour Tracing CNN for Contour Completion of Ships", ARXIV.ORG, CORNELL UNIVERSITY LIBRARY, 201 OLIN LIBRARY CORNELL UNIVERSITY ITHACA, NY 14853, 14 April 2020 (2020-04-14), XP081643759
- SULTANA FARHANA ET AL: "Evolution of Image Segmentation using Deep Convolutional Neural Network: A Survey", KNOWLEDGE-BASED SYSTEMS, ELSEVIER, AMSTERDAM, NL, vol. 201, 26 May 2020 (2020-05-26), XP086179027, ISSN: 0950-7051, [retrieved on 20200526], DOI: 10.1016/J.KNOSYS.2020.106062

## Description

### TECHNICAL FIELD

The invention relates to a method for object segmentation in images. The invention also relates to a data processing system, a computer program product and a computer readable medium implementing the method.

### BACKGROUND ART

In modern computer vision, image understanding is generally approached through specific tasks such as object detection and semantic or instance-level segmentation, or in other words, object segmentation. In object detection, the location of objects or object instances (i.e. a specific sample/species of an object within an object category) in the image, e.g. individual cars, pedestrians, traffic signs in case of automotive applications, are predicted as the pixel coordinates of boxes (rectangles) around that object, usually called bounding boxes. Semantic or instance segmentation tasks on the other hand aim at a dense, pixel-level labeling of the whole image, specifying the object category and/or the specific instance for every pixel. In particular, the task of instance segmentation in images is to label each pixel with an identification tag, a number or a code of the instance that the pixel belongs to. As a result, a mask is provided for each object marking those pixels in the image that are associated with the object. This type of representation gives a more precise description on the location, extent, and shape of the objects visible in the scene than the commonly used bounding box (or bounding rectangle) representation is capable of.

A pixel-level segmentation method is disclosed in US 10,067,509 B1 for detecting occluding objects. The method performs pixel-level instance segmentation by predicting for each pixel a) semantic label of different target categories (e.g. car, pedestrian), and b) a binary label indicating whether the pixel is a contour point or not. The individual instance masks can be recovered by separating the pixels of a category with the predicted contours.

The above technical solution is extended in US 10,311,312 B2, wherein two separate classifiers are trained for handling static and dynamic cases separately. The dynamic classifier is used if the tracking of a particular vehicle on multiple video frames is successful, otherwise the static classifier is applied on individual frames. The same pixel-level approach is used for segmentation as in the above document.

Document US 2018/0108137 A1 also discloses an instance-level semantic segmentation system, wherein a rough location of a target object in the image is determined by predicting a bounding box around each object. Then in the second step, a pixel-level instance mask is predicted using the above bounding box of each object instance.

The main disadvantage of pixel-level segmentation methods is their high computational need and the related time consumption. In certain aspects of the segmentation task, the speed of recognition is crucial, i.e. in case of self-driving cars. Methods that require too much computational power or simply too slow for real-time results are not fit for such applications.

An approach to speed up the computation lead to the following technical solutions, in which a smaller map (instance map) is created, i.e. with lower resolution, and then the map is scaled to the size of the image.

One example is a publication of K. He et al. "Mask R-CNN" (2017) disclosing a twostep approach for object instance segmentation. Firstly, an object proposal step is applied to roughly localize all the instances of a target category or categories in the image. Then, in a second step the instance segmentation problem is defined as a pixel-labeling task, where the binary pixels of the segmentation mask of an instance are directly predicted on a fixed-sized (e.g. 14x14 pixels) grid. Here, binary ones in the mask denote the pixel locations of the corresponding object. Then the predicted mask is transformed/rescaled back to the proper location and size of the object. The disadvantage of this solution is that even for such a small grid, a very complex neural network is to be used having an output dimension of at least 14x14 = 122.This amount of nodes and weighting factors slow down the segmentation, furthermore the generated small map has to be scaled and interpolated to the size of the full image that further deteriorates the speed and the efficiency of the method.

A similar method is disclosed in US 2009/0340462 A1, wherein a neural network is used to identify pixels of salient objects in images. First, the resolution of the image is decreased, and the neural network is applied on this reduced image to identify the pixels belonging to the main objects in the image, based on which the main objects' pixels are identified in the original, full resolution image.

The disadvantage of the above technical solutions is that a further step is required to determine the contour or the pixels of the objects in the image that requires further computational power and time.

Another approach for segmentation is to approximate the contour of an object by a polygon and, instead of the exact contour of the object, the polygon is predicted, preferably by a trained neural network. This approach significantly reduces the computational time and needs compared to the pixel-level segmentation techniques.

In a publication of L. Castrejón et al. "Annotating Object Instances with a Polygon-RNN" (The IEEE Conference on Computer Vision and Pattern Recognition (CVPR), 2017, pp. 5230-5238), the authors propose a solution that represents an instance segmentation mask by a polygon outlining the instance. The vertices of the polygon are reconstructed sequentially one-by-one with a recurrent neural network. An extension of this approach from the same research group is "Polygon-RNN++" (2018). The disadvantage of this solution is that the recurrent neural networks have a complex structure resulting in slower computations.

A further approach is introduced in a publication of N. Benbarka et al. "FourierNet: Compact mask representation for instance segmentation using differentiable shape decoders" (arXiv:2002.02709 [cs.CV], 2020). This publication discloses a singlestage segmentation method in contrast to two-stage segmentation methods. This approach represents the contour of an object by a set of points that are intersections of imaginary rays starting from near the center of mass of the contour and the contour, which is a single-component parametrization of the contour. In case more intersections exist for a single ray, then the intersection farther from the center of mass is selected. A neural network is used to predict the Fourier coefficients (Fourier descriptor) of the set of points representing the contour, from which the contour is reconstructed by inverse Fourier transform. However, the steps used in this method on the one hand limit the complexity of shapes to be modelled, and on the other hand reduce the information present in the neglected contour coordinates. The greatest disadvantage of this method is that the contours of objects having a concave shape can never be correctly predicted and reconstructed, only an envelope of the contour of the object can be approximated. In certain applications however there is a need for exact shape or contour reconstruction.

Another approach, based on active contours, is disclosed in "Fourier-based geometric shape prior for snakes", by Charmi et al., Pattern recognition letters, vol. 29, no. 7, pp. 897-904. $

In view of the known approaches, there is a need for a method by the help of which a segmentation of objects in images can be carried out for objects having any contours, including concave shaped contours.

### DESCRIPTION OF THE INVENTION

The primary object of the invention is to provide a method for object segmentation in an image, which is free of the disadvantages of prior art approaches to the greatest possible extent.

The object of the invention is to provide a method by the help of which objects in images can be segmented in a more efficient way than the prior art approaches in order to enable segmentation of objects having any shapes or contours. Accordingly, the object of the invention is to provide a reliable segmentation method that is capable of reconstructing the contour of objects with any shape in images.

The further object of the invention is to provide a data processing system that comprises means for carrying out the steps of the method according to the invention. Furthermore, the object of the invention is to provide a non-transitory computer program product for implementing the steps of the method according to the invention on one or more computers and a non-transitory computer readable medium comprising instructions for carrying out the steps of the method on one or more computers.

The objects of the invention can be achieved by the method according to claim 1. The objects of the invention can be further achieved by the data processing system according to claim 14, by the non-transitory computer program product according to claim 15, and by the non-transitory computer readable medium according to claim 16. Preferred embodiments of the invention are defined in the dependent claims.

The main advantage of the method according to the invention compared to prior art approaches comes from the fact that it can reconstruct a contour (segmentation contour) of an object having any shape, including complex shapes, even a concave shape. This way a more accurate object segmentation can be achieved than by any methods known in the prior art, as the location of the objects can be determined by higher precision.

It has been recognized, that using a two-coordinate parametrization of a contour allows for an accurate representation of any closed two-dimensional curves, i.e. complex contours of objects in images, without ambiguities. Segmentation methods are frequently used in decision making processes, e.g. in automotive applications, where the speed of the decision making can be crucial. An obvious choice to speed up the decision making process is to use predetermined, simple shapes that can be easily and quickly recognized even from a few characteristic points. Contrary to this approach, the method according to the invention is adapted to recognize arbitrary, complex shapes. It has been recognized that although the determination of arbitrary, complex shapes may increase the computational needs of the method, it also increases the precision of the decision making process based on the detected contours, which is desired in various safety-critical applications such as applications related to self-driving vehicles or medical applications. Moreover, the parameterization of the segmentation contour according to the invention provides flexibility and control to balance between the accuracy and computational efficiency of the method.

It has also been recognized, that instead of a simple two-coordinate representation of the contour a transformed (e.g. Fourier transformed) representation is to be used in order to decrease the computational needs for estimating the representation of the contour by a machine learning system implementing any known machine learning algorithm or method, e.g. comprising a neural network, e.g. a convolutional neural network (CNN), which provides an efficient estimation of the representation of the contour. By using the transformed representation having a fixed length resulting in a compact representation of the contour, the complexity of the trained machine learning system can be reduced as compared to the current technology involving pixel-level instance description, which results in a higher processing speed, and in a smaller memory footprint. It is also advantageous that the contour can be easily reconstructed from the compact representation.

Another advantage is that due to the smaller computational needs, the method according to the invention can reconstruct the contours of the objects with a higher precision compared to the prior art solutions if using the same computational power.

The method according to the invention is capable of segmenting multiple objects in the image including objects that are occluded or partially hidden. An occluded or partially hidden object is an object that is not visible in the image in total, e.g. because at least a part of it is hidden behind another object, in which case the visible parts of the objects can be segmented and depending on the specific embodiments of the method, the occluded parts of the object may be ignored or be assigned to the visible parts of the same object.

Certain embodiments of the method according to the invention are capable of reconstructing the contour of the object by estimating a typical appearance (a basic representation or a reference contour) of the shape of the object and also by estimating at least one geometric parameter of a geometric transformation such as scaling, rotation, mirroring, or translation of the object, or a combination thereof, wherein the geometric parameter or geometric parameters correspond to the size, position and orientation of the object in the image. Separating the basic shape of the object and the above-mentioned geometric transformations provides a representation of object contours that can be estimated in a more efficient manner, wherein the basic shape or reference contour is invariant to the above geometric transformations. Certain machine learning algorithms/methods, e.g. convolutional neural networks are invariant to translations, which aligns well with such a disjoint representation of the object contour. By the application of this disjoint representation, the same reference contours can be estimated for the same object located at different parts of the image, regardless of their sizes, positions and orientations. The information regarding to the exact size, position and orientation can be encoded in a few geometric parameters. Furthermore, in real applications, the geometric transformations well approximate rigid-body transformations in the 3D space, i.e. movement of an object as projected to the image. Therefore, in case of several images are processed in a sequence, e.g. images of a camera stream, wherein the consecutive images are similar to each other, the overall shape of the object in the images is almost identical, but the size, position or orientation can be slightly different. The approach of determining the shape and the corresponding geometric parameters further reduces the computational needs of the method and allows for a faster segmentation of the objects in the images. Such a representation is easier to be learned by machine learning methods, including but not limited to convolutional neural networks.

The method according to the invention therefore can be used in any vision-based scene understanding system, including medical applications (medical image processing) or improving the vision of self-driving vehicles.

### BRIEF DESCRIPTION OF THE DRAWINGS

Preferred embodiments of the invention are described below by way of example with reference to the following drawings, where
Fig. 1 and Fig. 2 illustrate the steps of a preferred embodiment of the method according to the invention,
Fig. 3 and Fig. 4 illustrate the steps of another preferred embodiment of the method according to the invention,
Fig. 5 is an example of values of a Fourier descriptor of a segmentation contour determined by a neural network,
Fig. 6 illustrates the application of the method according to Fig. 4 on an image,
Fig. 7 shows a comparison of the reconstructed segmentation contours determined by manual annotations, by a method according to Fig. 2, and by a method according to Fig. 4,
Fig. 8 shows exemplary values of the coefficients of a Fourier descriptor, and
Fig. 9 illustrates the use of the method according to the invention to reconstruct the segmentation contours of an occluded object.

### MODES FOR CARRYING OUT THE INVENTION

The invention relates to a method for segmentation of objects or object instances in images, all together called object segmentation. The object instances are preferably limited to an application-specific set of categories of interest, e.g. cars, pedestrians etc. in an automotive application or various organs in case of a medical application. Throughout the description, the word "object" can indicate different object instances from the same category, or objects from different categories. Moreover, the term "object segmentation" is used for the task of instance segmentation, i.e. to label the pixels of an image with an identification tag of the corresponding object instance the pixels belongs to. In applications where only one object is present in the image, object segmentation simplifies to semantic segmentation, i.e. labeling each pixel with its category.

In case of object segmentation, the usual task is to predict a label (an identification tag, e.g. a number, a code or a tag) for each pixel corresponding to a particular object in the image, resulting in a pixel-wise object mask. In the method according to the invention, the objects to be segmented are represented by their contour (segmentation contour) in the image, based on which a mask for the object can be created, i.e. by including the pixels within the segmentation contour with or without the segmentation contour itself.

According to the invention, instead of determining the real-space coordinates of the segmentation contour points directly, a representation, preferably a compact representation, is generated from the points of the segmentation contour. This representation of the segmentation contour (usually called a descriptor of the contour or a descriptor) can be learned by a machine learning system. The machine learning system preferably implements any known machine learning algorithm or method, e.g. the machine learning system comprises a neural network, preferably a convolutional neural network. A trained machine learning system can determine the descriptor, from which the segmentation contour can be reconstructed, preferably by an inverse transform. Embodiments of the method according to the invention shown in the figures are implemented by applying neural networks as a machine learning algorithm due to their high efficiency in segmentation tasks compared to other machine learning algorithms/methods known in the art. However, other machine learning algorithms/methods can also be used, for example methods for filtering or feature extraction (e.g. scale-invariant feature transform (SIFT), histogram of oriented gradients (HOG), Haar-filter or Gabor-filter), regression methods (e.g. single vector regression (SVR) or decision tree), ensemble methods (e.g. random forest, boosting), feature selection (e.g. minimum redundancy and maximum relevance (MRMR)), dimension reduction (e.g. principal component analysis (PCA)) or any suitable combinations thereof. The machine learning algorithm/method has to be trained to match an image and a representation (descriptor) of a contour of an object from which the segmentation contour can be reconstructed.

The method according to the invention for object segmentation in an image, comprises the steps of
- inputting the image to a trained machine learning system,
- estimating, by the trained machine learning system, a representation of a segmentation contour of an object in the image, wherein the segmentation contour is a closed two-dimensional parametric curve, each point of which is defined by two coordinate components, wherein both coordinate components are parametrized, and
- reconstructing the segmentation contour of the object from the estimated representation of the segmentation contour.

According to the invention, the segmentation contour of the object is a closed two-dimensional parametric curve, points (contour points) of which is defined by two coordinate components, wherein both coordinate components are parametrized. The use of a discrete number of contour points can limit the complexity of the method and reduce the computational needs.

Preferably, the two coordinate components of the segmentation contour are independently parametrized, e.g. by a time-like parameter, preferably by a single time-like parameter. The parametrized coordinate components within the 2D plane may be expressed in any coordinate system and reference frame, using e.g. a Cartesian, a polar or a complex (or any alternative) coordinate representation. The advantage of parametrizing both coordinate components of the two-dimensional curve is that curves having any shape (including concave shapes) can be represented. In a preferred embodiment of the method according to the invention, the segmentation contour is represented by Cartesian coordinates, even more preferably the segmentation contour is represented by Cartesian coordinates parametrized with a time-like parameter t encoding the trajectory r of the curve, i.e. r(t) = (x(t), y(t)), wherein x and y are functions defining respective Cartesian coordinates of contour points of the segmentation contour. In another preferred embodiment the parametrization of the segmentation contour is encoded via its tangent vector, i.e. the velocity along the trajectory, which can be extracted as displacement vectors of the contour points. In a further preferred embodiment, the segmentation contour is parametrized as a sequence of standardized line segments linking together the points of the segmentation contour.

Instead of directly estimating the contour points of the segmentation contour, the method according to the invention estimates, by the trained machine learning system, a representation, preferably a transformed, compact representation of the contour. The accuracy of the method, i.e. the closeness of the segmentation contour to the exact contour of the object, can be controlled by the dimensions of the transformed representation, e.g. also considering the available computational resources. The transformed representation also allows for a disjoint representation of the segmentation contour comprising a generic shape of the object (e.g. a reference contour) and a geometrical transformation imposed on the shape. In a preferred embodiment of the invention, the compact representation can be generated by Fourier transform, even more preferably by discrete Fourier transform.

Accordingly, in a preferred embodiment of the invention, the sequence of the above displacement vectors is transformed from the spatial domain into the frequency domain, preferably by Fourier transform, even more preferably by discrete Fourier transform. As a result, the segmentation contour is represented by amplitudes of Fourier harmonics. This particular representation is commonly referred to as an elliptic Fourier descriptor (EFD) of a curve in the literature (F. P. Kuhl and C. R. Giardina, "Elliptic Fourier features of a closed contour", Computer Graphics and Image Processing, 1982). The advantage of the discrete Fourier transform is that it may be performed on any two-component parametrization of the curve. In order to obtain a compact representation of the segmentation contour, the number of coefficients of the descriptor are limited to a fixed value. This value can be an input parameter for the machine learning algorithm when estimating the representation (descriptor) of the segmentation contour, and it controls the accuracy (precision) of the reconstructed segmentation contour. By representing the segmentation contour of an object by a single vector of coefficients, a compact representation of fixed length is provided. The length of this vector is proportional to the number of harmonics used, e.g. in case of Fourier transform the number of Fourier harmonics indicating the order of the transform. Hereinafter this fixed-length vector is referred to as the Fourier descriptor.

For a single frequency, two real-valued Fourier coefficients account for the amplitude and phase of the given harmonic, respectively. Altogether, four real-valued coefficients are required to represent a single frequency component of the two-component trajectory along the real-space contour in two-dimension. As a result, in case the segmentation contour was represented by an elliptic Fourier descriptor, the length of the descriptor is 4xO, where O denotes the number of harmonics (also referred to as order in the literature) of the transform. This way the method according to the invention simplifies the task of object segmentation to a regression of a fixed-length vector containing the descriptor of the segmentation contour. This task can be learned from an existing set of training data containing image and segmentation contour (or object mask) pairs, from which the above vector representation can be derived. The regression can be implemented in any form including machine learning methods/algorithms, for example by convolutional neural networks. The segmentation contour can be reconstructed from the descriptor by applying an inverse of the transform, i.e. in case of elliptic Fourier descriptors the inverse discrete Fourier transform can be used.

It is emphasized that any suitable representations of coefficients such as Cartesian coordinates, polar coordinates or complex vectors are equivalent for the proposed method.

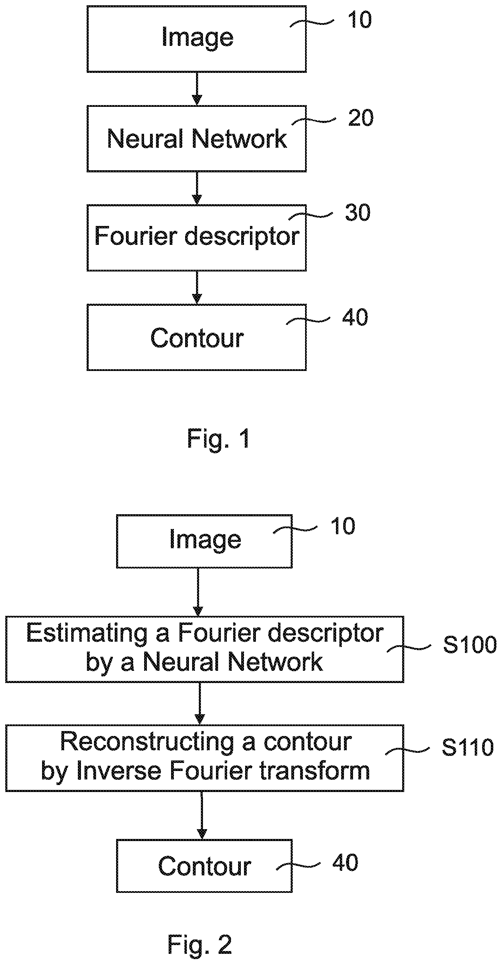

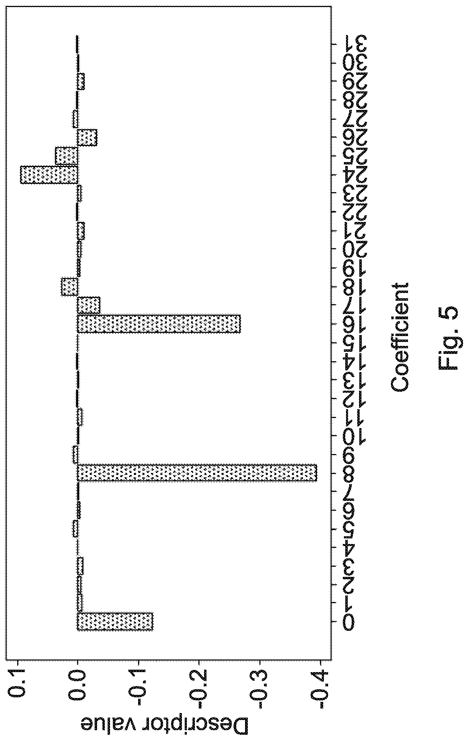

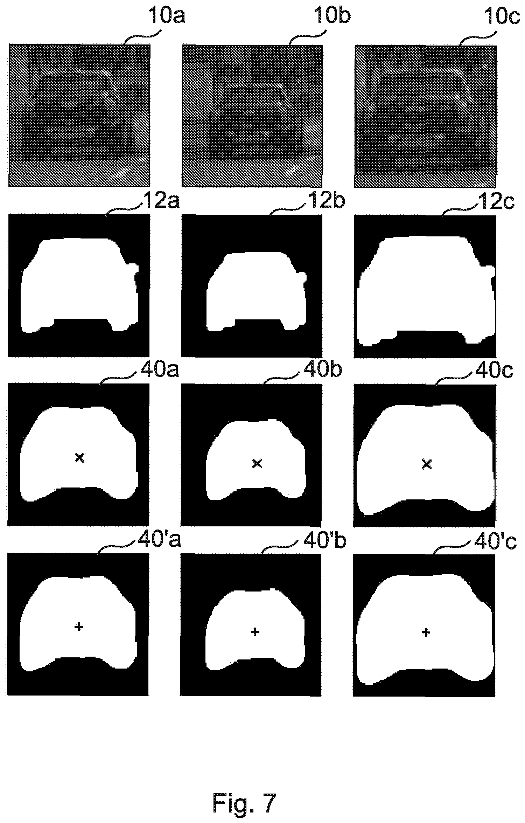

Figs. 1 and 2 illustrate a preferred embodiment of the method according to the invention, wherein the trained machine learning system comprises a neural network 20. The neural network 20 is trained to estimate a representation of the segmentation contour 40 of an object in an image 10 in step S100 (Fig. 2), wherein the representation of the segmentation contour 40 is a Fourier descriptor 30, preferably an elliptic Fourier descriptor, from which the segmentation contour 40 can be reconstructed by inverse Fourier transform in step S110 (Fig. 2). An example of the Fourier descriptor 30 is shown in Fig. 5. In this embodiment the neural network 20 directly determines the Fourier descriptor 30, from which the segmentation contour 40 can be reconstructed directly, i.e. no modification of the Fourier descriptor 30 is necessary for the reconstruction. The deviation of the reconstructed segmentation contour 40 from the exact contour (boundary) of the object to be segmented depends on the number of Fourier coefficients used in the Fourier descriptor 30. By increasing the number of Fourier coefficients in the Fourier descriptor 30, the reconstructed segmentation contour 40 will approximate the exact contour (boundary) of the object, however even a limited number of Fourier coefficients, e.g. 32 Fourier coefficients corresponding to a Fourier transform having an order of 8, result in a reconstructed segmentation contour 40 approximating the exact contour fairly well (see Fig. 7 and its description).

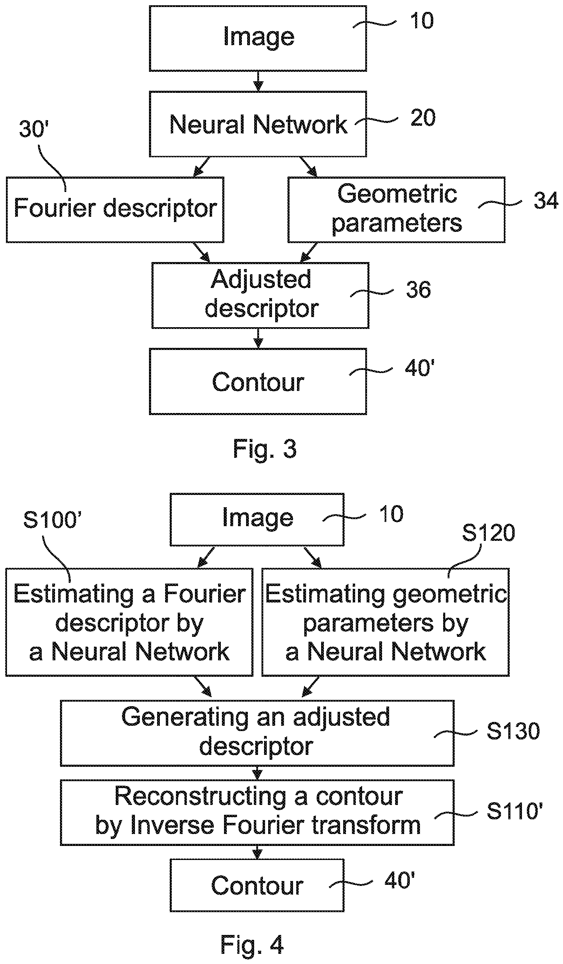

Figs. 3 and 4 illustrate a further preferred embodiment of the method according to the invention. In this embodiment the machine learning system also comprises a neural network 20 that is trained to estimate a representation of a reference contour of an object in step S100' (Fig. 4), wherein the reference contour belongs to a typical appearance of the object. The neural network 20 is further trained to estimate at least one geometric parameter 34 of a geometric transformation in step S120 (Fig.4). Thus, the estimated representation of the segmentation contour comprises the representation of the reference contour belonging to the typical appearance of the object and at least one geometric parameter 34 of a geometric transformation. The neural network 20 is preferably a convolutional neural network, and the geometric transformation is preferably any kind of geometric transformation such as scaling, translation, rotation, mirroring, or any suitable combination thereof. The geometric parameters 34 may represent the actual size, position and orientation of an object in the image 10. Exploiting these properties, a disentangled/disjoint representation can be created such that these geometric factors are separated from the shape descriptors (reference contour). Using this compact and disentangled representation the regression problem becomes easier to be learned by the machine learning system, as the representation of the reference contour and the geometric transformation parameters are independently handled. This disentangled representation allows for the application of a less complex neural network 20, which has a faster inference time, and a smaller memory footprint. Moreover, learning of simpler representations is usually less subjected to an overfitting by the neural network 20, and thereby increase the generalization property of the learned model.

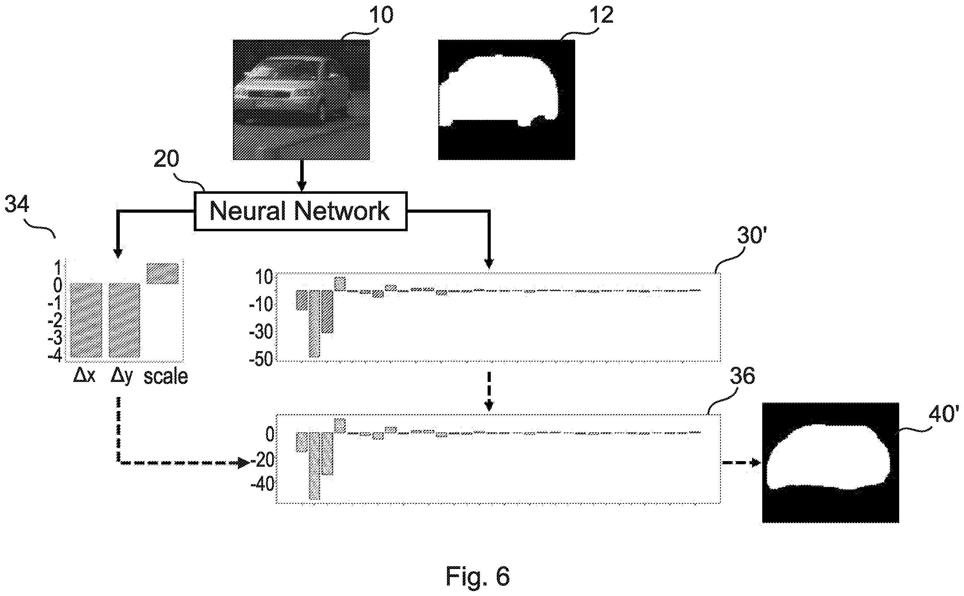

In the embodiment illustrated in Fig. 3 and Fig. 4, the representation of the segmentation contour comprises a Fourier descriptor, the Fourier descriptor being the Fourier transform of the reference contour. The outputs of the neural network 20 are the Fourier descriptor 30' of the reference contour of the object to be segmented and at least one geometric parameter 34 of a geometric transformation. The Fourier descriptor 30' of the reference contour and the geometric parameters 34 are combined together into an adjusted descriptor 36 in step S130 (Fig. 4), wherein the adjusted descriptor 36 is the estimated representation of the segmentation contour 40'. The segmentation contour 40' is reconstructed in step S110' (Fig. 4) from the adjusted descriptor 36 by applying an inverse Fourier transform, preferably an inverse discrete Fourier transform (IDFT). An illustration of the steps of the above embodiment of the method can be seen in Fig. 6.

In a further preferred embodiment of the method according to the invention (not illustrated, the reference signs refer to the ones in Fig. 3 and 4.), the estimated representation of the segmentation contour preferably comprises a representation of a reference contour belonging to a typical appearance of the object and at least one geometric parameter 34 of a geometric transformation. The geometric transformation is preferably any kind of geometric transformation such as scaling, translation, rotation, mirroring, or any suitable combination thereof, wherein the geometric parameters 34 may represent the actual size, position and orientation of the object. The representation of the segmentation contour preferably comprises a Fourier descriptor, preferably an elliptic Fourier descriptor, the Fourier descriptor being the Fourier transform of the reference contour. For reconstructing the segmentation contour 40', firstly, the reference contour is reconstructed from the representation of the reference contour, preferably by applying an inverse Fourier transform, even more preferably an inverse discrete Fourier transform on the Fourier descriptor of the reference contour. Then, in a second step, the reconstructed reference contour is transformed into the segmentation contour 40' by applying the geometric transformation on the reconstructed reference contour.

Fig. 5 shows exemplary values of a Fourier descriptor 30, in this case an elliptic Fourier descriptor, estimated by a neural network 20 comprised by the machine learning system, according to the method of Figs. 1 and 2. In the illustrated case a Fourier transform up to the 8th order was used to represent the segmentation contour 40 of an object, thus 8x4 Fourier coefficients were estimated by the neural network 20. By applying inverse Fourier transform on these estimated coefficients constituting the Fourier descriptor 30, the segmentation contour 40 of the object can be reconstructed.

An implementation of the method according to Figs. 3 and 4 is illustrated in Fig. 6. An input of the machine learning system comprising a neural network 20 is provided with an image 10 to be segmented, wherein the neural network 20 is preferably a convolutional neural network. The neural network 20 is trained to estimate a Fourier descriptor 30' corresponding to a reference contour (shape) of the object and at least one geometric parameter 34 of a geometric transformation, wherein the geometric parameter 34 corresponds to the size, position, and/or orientation of the object. The Fourier descriptor 30' is illustrated by the estimated Fourier coefficients, similarly to Fig. 5. The geometric parameter 34 in this case include horizontal and vertical displacement of the object in the image 10 denoted by Δx and Δy, respectively, and a scale factor. The Fourier descriptor 30' and the geometric parameters 34 are combined into an adjusted descriptor 36 from which the segmentation contour 40' of the object can be reconstructed by inverse Fourier transform.

Fig. 6 also includes a manually annotated contour, i.e. the ground truth contour 12 of the image 10. It can be seen from the qualitative comparison of the ground truth contour 12 and the reconstructed segmentation contour 40' that the latter gives a good approximation of the exact contour, i.e. the position, the size and the general shape of the object is consistent that of the ground truth contour 12.

A detailed comparison of the reconstructed segmentation contours determined by manual annotations, by the method according to Fig. 2, and by the method according to Fig. 4 is illustrated in Fig. 7. The first row of Fig. 7 consists of images 10a, 10b, 10c to be segmented. The images 10a, 10b, 10c are grayscale or color images showing the same object (a vehicle) in different views, thus the size and position of the objects are different. The second row of Fig. 7 shows the ground truth contour 12a, 12b, 12c of the object determined by manual annotation.

The third row of Fig. 7 shows the reconstructed segmentation contours 40a, 40b, 40c of images 10a, 10b, 10c, respectively, according to the preferred embodiment of the method according to Fig. 2. The center of mass of each reconstructed segmentation contour 40a, 40b, 40c is denoted with a cross. The reconstructed segmentation contours 40a, 40b, 40c are in line with the objects seen in images 10a, 10b, 10c and the ground truth contours 12a, 12b, 12c. The reconstructed segmentation contours 40a, 40b, 40c were reconstructed from a Fourier descriptor 30 determined by the trained machine learning system, according to Fig. 1 and Fig. 2 by a neural network 20 of the trained machine learning system. The Fourier descriptor 30 in this specific example is having thirty-two coefficients corresponding to a Fourier transform having eight harmonics (the order of the Fourier transform is 8).

The fourth row of Fig. 7 shows the reconstructed segmentation contours 40'a, 40'b, 40'c of images 10a, 10b, 10c, respectively, according to the preferred embodiment of the method according to Fig. 4. The center of mass of each reconstructed segmentation contour 40a, 40b, 40c is denoted with a plus sign.

As it can be seen in Fig. 7, the different embodiments of the method according to the invention, e.g. the method according to Fig. 2 and the method according to Fig. 4 result in similar reconstructed segmentation contours 40a, 40b, 40c and reconstructed segmentation contours 40'a, 40'b, 40'c. All the reconstructed segmentation contours 40a, 40b, 40c and reconstructed segmentation contours 40'a, 40'b, 40'c are similar to the respective ground truth contours 12a, 12b, 12c.

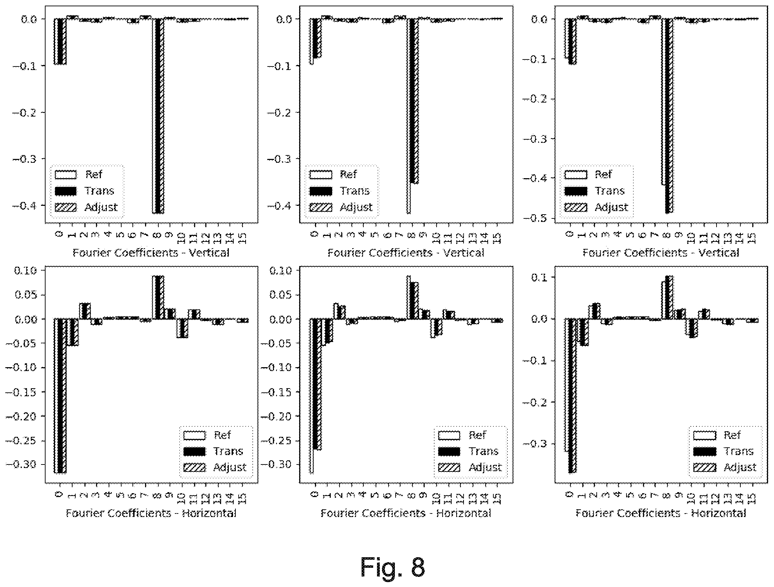

Fig. 8 represents comparative diagrams of the values of the coefficients of the Fourier descriptors (Fourier coefficients) according to Fig. 7. The Fourier coefficients are grouped according to the two-coordinate representation of the segmentation contour, i.e. the horizontal and vertical coordinate components of the segmentation contour in a Cartesian basis. The diagrams of Fig. 8 compare the respective values of the Fourier coefficients, wherein white columns represent the values of the ground truth contours 12a, 12b, 12c according to Fig. 7 (second row), black columns represent the values of the Fourier coefficients according to the method of Fig. 2 (third row of Fig. 7), and wherein striped columns represent the values of the Fourier coefficients according to the method of Fig. 4 (fourth row of Fig. 7). As it can be seen from the diagrams of Fig. 8, the reconstructed segmentation contours 40a, 40b, 40c, 40'a, 40'b, 40'c give a good approximation of the ground truth contours 12a, 12b, 12c, thus the embodiments of the method according to the invention can be used for a fast and reliable segmentation of objects in images.

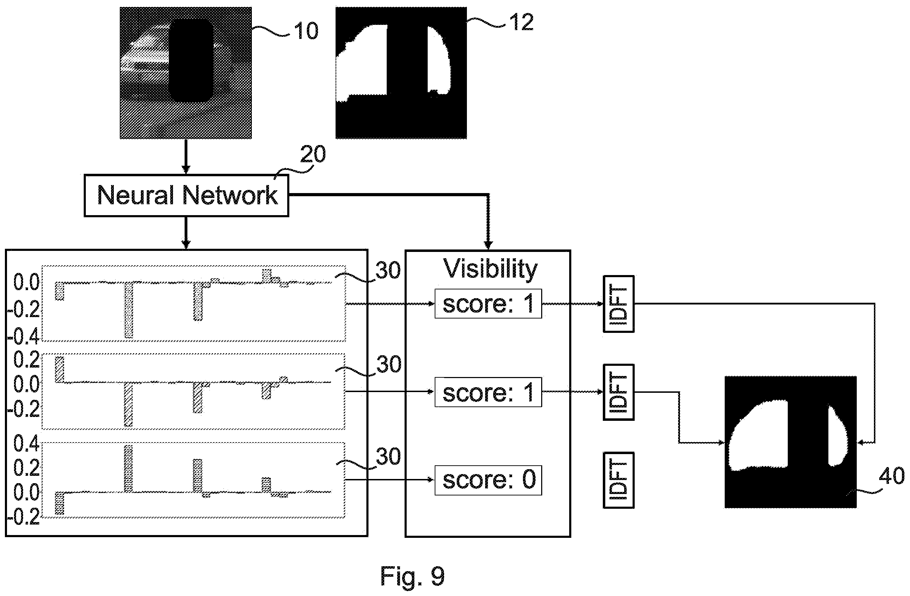

Fig. 9 gives an example of the use of the method according to the invention to reconstruct a segmentation contour of an object having an obstructed/occluded view in the image 10, e.g. a partially hidden object. In this example part of the object in the image 10 was artificially covered, in other cases the object might be covered by a different object (occluding objects). In specific applications of the method according to the invention, the occluded parts of an object may be ignored or in other applications, the occluded parts are to be assigned to the visible parts of the same object.

In case of an occlusion, it is preferable to denote parts of the same object with the same identification tag during segmentation. According to a preferred embodiment of the method according to the invention, an ordering parameter, representing e.g. a depth or a layer, can be determined for occluding objects. Based on the ordering parameter, e.g. having an ordering parameter with a same or a similar value, segmented contours belonging to the same occluded object can be identified and the same identification tag can be assigned to segmentation contours belonging to the same object.

In a further preferred embodiment, for handling occlusions, a visibility score value is generated by the machine learning algorithm, preferably for the estimated representation of each segmentation contour. The visibility score value preferably indicates visibility or non-visibility of each object part resulting from breaking up the object into parts by the occlusion. Based on the visibility score value, non-visible object parts can be ignored or omitted, e.g. can be excluded from a segmented image, or alternatively, the non-visible object parts can be assigned to the visible parts of the same object, i.e. by assigning the same identification tag. The same identification tags are preferably assigned based on an ordering parameter as described above.

According to the embodiment shown in Fig. 9, the trained machine learning system comprises a neural network 20, wherein the neural network 20 is trained to detect a predetermined number of objects and/or single objects constituting a predetermined number of parts. In the example according to Fig. 9, the maximum number of parts constituting an object is three, or alternatively, three individual objects are segmented. The neural network 20 according to this embodiment of the method thus estimates three Fourier descriptors 30 (three sets of Fourier coefficients), preferably elliptic Fourier descriptors, the values of each Fourier descriptors 30 are indicated in graphs, similarly to Fig. 5. The neural network 20 also determines a visibility score value indicating the visibility of each object or object part. If an object or object part is not visible (occluded), its visibility score value will be zero. In this example only two visible objects (i.e. two parts of the same object) are present in image 10, thus only these two will have a non-zero visibility score value.

The visibility score value of visible object parts in this example is 1, however, other non-zero values can be used to indicate further parameters or features of the visible objects or object parts. In certain embodiments of the method according to the invention, the visibility score value can comprise a value of an ordering parameter, e.g. corresponding to a distance from the camera taking the image 10. Based on the visibility score value and/or the ordering parameter, a relation, preferably a spatial relation of the segmentation contours can be determined, and segmentation contours belonging to the same object can be identified.

In the example according to Fig. 9, the visibility score value is 1 for objects or object parts visible in the image 10 and the visibility score value is 0 for objects or object parts not visible in the image 10 (hidden or occluded objects or object parts). According to Fig. 9, the reconstruction of the segmentation contour is carried out only for the visible objects or object parts, i.e. having a visibility score value indicating visibility, in this case only for the objects/object parts having a non-zero visibility score value, via inverse discrete Fourier transform (IDFT). The reconstructed segmentation contours 40 of each object/object part are shown in the same reconstructed segmentation contour image.

The invention further relates to a data processing system comprising means for carrying out the steps of the method according to the invention. The data processing system is preferably implemented on one or more computers, and it is trained for object segmentation, e.g. for providing an estimation of a representation of a segmentation contour of an object. The input of the data processing system is an image to be segmented, the image including one or more objects or object parts. The segmentation contour of the object is represented as a closed two-dimensional parametric curve, each point of which is defined by two coordinate components, wherein both coordinate components are parametrized. Characteristic features of the representation of the segmentation contour has been discussed in more detail in connection with Fig. 1 and 2. The data processing system is preferably comprises a machine learning system trained by any training method known in the art, preferably the machine learning system is trained on segmented images having a manual annotation of contours (ground truth contours) and on the representation of the segmentation contour being a closed two-dimensional parametric curve, each point of which is defined by two coordinate components, wherein both coordinate components are parametrized. Preferably, the representation of the segmentation contour is a Fourier descriptor, even more preferably an elliptic Fourier descriptor.

Preferably, the machine learning system of the data processing system is further trained to provide an estimation of at least one parameter of a geometric transformation and/or an identification tag for each object, wherein the geometric transformation comprises scaling, translation, rotation and/or mirroring, and the identification tag is preferably a unique identifier of each object.

In a preferred embodiment, the same identification tag is assigned to parts of the same object. In a further preferred embodiment, the machine learning system of the data processing system is trained to segment multiple objects in an image, and/or objects braking up into parts due to occlusion. A preferred data processing system comprises a machine learning system that is trained to determine a visibility score value for each object or object part relating to the visibility of the respective object or object part. For handling occlusions, the visibility score value may comprise a value of an ordering parameter representing relative position of the occluding object, based on which the same identification tag can be assigned to object parts belonging to the same object.

The machine learning system of the data processing system preferably includes a neural network, more preferably a convolutional neural network, trained for object segmentation.

The invention, furthermore, relates to a computer program product comprising instructions which, when the program is executed by a computer, cause the computer to carry out an embodiment of the method according to the invention. The computer program product may be executable by one or more computers. The invention also relates to a computer readable medium comprising instructions which, when executed by a computer, cause the computer to carry out an embodiment of the method according to the invention.

The computer readable medium may be a single one or comprise more separate pieces.

The invention is, of course, not limited to the preferred embodiments described in detail above, but further variants, modifications and developments are possible within the scope of protection determined by the claims.

### List of reference signs

- 10: image
- 10a, 10b, 10c: image
- 12: ground truth contour
- 12a, 12b, 12c: ground truth contour
- 20: neural network
- 30, 30': Fourier descriptor
- 34: geometric parameter
- 36: adjusted descriptor
- 40, 40': segmentation contour
- 40a, 40b, 40c: segmentation contour
- 40'a, 40'b, 40'c: segmentation contour

- S100, S100': (Fourier descriptor estimating) step
- S110, S110': (contour reconstructing) step
- S120: (geometric parameter estimating) step
- S130: (adjusted descriptor generating) step

## Claims

1. A method for object segmentation in an image (10), comprising the steps of
- inputting the image (10) to a trained machine learning system, and
- estimating, by the trained machine learning system, a representation of a segmentation contour (40, 40') of an object in the image (10), wherein the segmentation contour (40, 40') is a closed two-dimensional parametric curve,
**characterized by**
- reconstructing the segmentation contour (40, 40') of the object having any contours, including concave shaped contours from the estimated representation of the segmentation contour (40, 40'),
wherein
- each point of the segmentation contour (40, 40') is defined by two coordinate components, wherein both coordinate components of the segmentation contour (40, 40') are independently parametrized, and
- the estimated representation comprises
- at least one parameter of a geometric transformation estimated by the trained machine learning system, and
- a representation of a reference contour belonging to a typical appearance of the object estimated by the trained machine learning system.

2. The method according to claim 1, **characterized in that** the reconstruction of the segmentation contour (40, 40') is carried out by
- generating an adjusted representation by combining the at least one parameter of the geometric transformation with the reference contour, and reconstructing the segmentation contour (40, 40') from the adjusted representation, or
- reconstructing the reference contour from the representation of the reference contour, and transforming the reconstructed reference contour with the geometric transformation into the segmentation contour (40, 40').

3. The method according to claim 1 or claim 2, **characterized in that** the geometric transformation comprises scaling, translation, rotation and/or mirroring.

4. The method according to any of the preceding claims, **characterized in that** the representation of the segmentation contour (40, 40') is obtained by a Fourier transform, and the estimated representation comprises a Fourier descriptor estimated by the trained machine learning system, and the reconstruction of the segmentation contour (40, 40') is comprises applying an inverse Fourier transform on the Fourier descriptor.

5. The method according to claim 4, **characterized in that** the Fourier descriptor is an elliptic Fourier descriptor.

6. The method according to any of the preceding claims, **characterized by** further comprising generating an identification tag for each segmentation contour (40, 40') by the trained machine learning system.

7. The method according to claim 6, **characterized in that**, for handling occlusions, a visibility score value is generated by the trained machine learning system for the representation of each segmentation contour (40, 40'), wherein the visibility score value indicates whether objects or object parts are visible, hidden or occluded; and the segmentation contour (40, 40') is reconstructed only for representations having a visibility score value indicating visibility of the object.

8. The method according to claim 7, **characterized in that** in case of an occlusion, the same identification tag is assigned to segmentation contours (40, 40') that belong to the same object.

9. The method according to any of the preceding claims, **characterized in that** the trained machine learning system comprises a neural network.

10. The method according to claim 9, **characterized in that** the neural network is a convolutional neural network.

11. A data processing system for object segmentation in an image (10), comprising a trained machine learning system for estimating a representation of a segmentation contour (40, 40') of an object in the image (10), wherein the segmentation contour (40, 40') is a closed two-dimensional parametric curve, and the data processing system is adapted to
- input the image (10) to be segmented to the trained machine learning system, **characterized in that** the data processing system is further adapted to
- reconstruct the segmentation contour (40, 40') of the object having any contours, including concave shaped contours from the estimated representation of the segmentation contour (40, 40'),
wherein
- each point of the segmentation contour (40, 40') is defined by two coordinate components, wherein both coordinate components of the segmentation contour (40, 40') are independently parametrized, and H
- the estimated representation comprises
- at least one parameter of a geometric transformation estimated by the trained machine learning system, and
- a representation of a reference contour belonging to a typical appearance of the object estimated by the trained machine learning system.

12. A non-transitory computer program product comprising instructions which, when the program is executed by a computer, cause the computer to carry out the method of any of claims 1-10.

13. A non-transitory computer readable medium comprising instructions which, when executed by a computer, cause the computer to carry out the method of any of claims 1-10.

## Patentansprüche

1. Verfahren zur Objektsegmentierung in einem Bild (10), mit den folgenden Schritten:
- Eingabe des Bildes (10) in ein trainiertes maschinelles Lernsystem, und
- Schätzen einer Darstellung einer Segmentierungskontur (40, 40`) eines Objekts in dem Bild (10) durch das trainierte maschinelle Lernsystem, wobei es sich bei der Segmentierungskontur (40, 40`) um eine geschlossene zweidimensionale parametrische Kurve handelt,
**gekennzeichnet durch**
- Rekonstruieren der Segmentierungskontur (40, 40`) des Objekts mit beliebigen Konturen, einschließlich konkav geformter Konturen aus der geschätzten Darstellung der Segmentierungskontur (40, 40'),
wobei
- jeder Punkt der Segmentierungskontur (40, 40`) durch zwei Koordinatenkomponenten definiert ist, wobei beide Koordinatenkomponenten der Segmentierungskontur (40, 40`) unabhängig voneinander parametrisiert sind, und
- die geschätzte Darstellung Folgendes umfasst:
- mindestens einen, durch das trainierte maschinelle Lernsystem geschätzten Parameter einer geometrischen Transformation, und
- eine Darstellung einer Referenzkontur, die zu einem durch das trainierte maschinelle Lernsystem geschätzten typischen Erscheinungsbild des Objekts gehört.

2. Verfahren nach Anspruch 1, **dadurch gekennzeichnet, dass** die Rekonstruktion der Segmentierungskontur (40, 40') dadurch erfolgt, dass
- eine angepasste Darstellung erzeugt wird, indem der mindestens eine Parameter der geometrischen Transformation mit der Referenzkontur kombiniert wird und die Segmentierungskontur (40, 40') aus der angepassten Darstellung rekonstruiert wird, oder
- die Referenzkontur aus der Darstellung der Referenzkontur rekonstruiert wird und die rekonstruierte Referenzkontur mit der geometrischen Transformation in die Segmentierungskontur (40, 40') umgewandelt wird.

3. Verfahren nach Anspruch 1 oder Anspruch 2, **dadurch gekennzeichnet, dass** die geometrische Transformation eine Skalierung, Translation, Rotation und/oder Spiegelung umfasst.

4. Verfahren nach einem der vorhergehenden Ansprüche, **dadurch gekennzeichnet, dass** man die Darstellung der Segmentierungskontur (40, 40`) durch eine Fourier-Transformation erhält und die geschätzte Darstellung einen durch das trainierte maschinelle Lernsystem geschätzten Fourier-Deskriptor umfasst, und dass die Rekonstruktion der Segmentierungskontur (40, 40`) die Anwendung einer inversen Fourier-Transformation auf den Fourier-Deskriptor umfasst.

5. Verfahren nach Anspruch 4, **dadurch gekennzeichnet, dass** der Fourier-Deskriptor ein elliptischer Fourier-Deskriptor ist.

6. Verfahren nach einem der vorhergehenden Ansprüche, **dadurch gekennzeichnet, dass** es weiterhin das Erzeugen einer Identifikationsmarke für jede Segmentierungskontur (40, 40`) durch das trainierte maschinelle Lernsystem umfasst.

7. Verfahren nach Anspruch 6, **dadurch gekennzeichnet, dass** zur Behandlung von Okklusionen ein Wert für den Sichtbarkeits-Score durch das trainierte maschinelle Lernsystem für die Darstellung jeder Segmentierungskontur (40, 40') erzeugt wird, wobei der Wert für den Sichtbarkeits-Score anzeigt, ob Objekte oder Objektteile sichtbar, verborgen oder verdeckt sind; und dass die Segmentierungskontur (40, 40') nur für Darstellungen mit einem Wert für den Sichtbarkeits-Score rekonstruiert werden, der die Sichtbarkeit des Objekts anzeigt.

8. Verfahren nach Anspruch 7, **dadurch gekennzeichnet, dass** im Falle einer Okklusion dieselbe Identifikationsmarke Segmentierungskonturen (40, 40`) zugewiesen wird, die zu demselben Objekt gehören.

9. Verfahren nach einem der vorhergehenden Ansprüche, **dadurch gekennzeichnet, dass** das trainierte maschinelle Lernsystem ein neuronales Netzwerk umfasst.

10. Verfahren nach Anspruch 9, **dadurch gekennzeichnet, dass** das neuronale Netzwerk ein gefaltetes neuronales Netzwerk ist.

11. Datenverarbeitungssystem zur Objektsegmentierung in einem Bild (10), umfassend: ein trainiertes maschinelles Lernsystem zum Schätzen einer Darstellung einer Segmentierungskontur (40, 40') eines Objekts in dem Bild (10), wobei es sich bei der Segmentierungskontur um eine geschlossene zweidimensionale parametrische Kurve handelt und das Datenverarbeitungssystem dazu ausgelegt ist,
- das zu segmentierende Bild (10) in das trainierte maschinelle Lernsystem einzugeben, **dadurch gekennzeichnet, dass** das Datenverarbeitungssystem ferner dazu ausgelegt ist,
- die Segmentierungskontur (40, 40`) des Objekts mit beliebigen Konturen, einschließlich konkav geformter Konturen, aus der geschätzten Darstellung der Segmentierungskontur (40, 40') zu rekonstruieren, wobei
- jeder Punkt der Segmentierungskontur (40, 40`) durch zwei Koordinatenkomponenten definiert ist, wobei beide Koordinatenkomponenten der Segmentierungskontur (40, 40`) unabhängig voneinander parametrisiert sind, und
- die geschätzte Darstellung Folgendes umfasst:
- mindestens einen durch das trainierte maschinelle Lernsystem geschätzten Parameter einer geometrischen Transformation, und
- eine Darstellung einer Referenzkontur, die zu einem durch das trainierte maschinelle Lernsystem geschätzten typischen Erscheinungsbild des Objekts gehört.

12. Nicht-transitorisches Computerprogrammprodukt mit Befehlen, die bei Ausführung des Programms durch einen Computer den Computer dazu veranlassen, das Verfahren nach einem der Ansprüche 1-10 durchzuführen.

13. Nicht-transitorisches computerlesbares Medium mit Befehlen, die bei Ausführung durch einen Computer den Computer dazu veranlassen, das Verfahren nach einem der Ansprüche 1-10 durchzuführen.

## Revendications

1. Procédé de segmentation d'objet dans une image (10), comprenant les étapes consistant à
- entrer l'image (10) dans un système d'apprentissage automatique entraîné, et
- estimer, par le système d'apprentissage automatique entraîné, une représentation d'un contour de segmentation (40, 40') d'un objet dans l'image (10), dans lequel le contour de segmentation (40, 40') est une courbe paramétrique bidimensionnelle fermée,
**caractérisé par**
- reconstruire le contour de segmentation (40, 40') de l'objet présentant des contours quelconques, y compris des contours de forme concave, à partir de la représentation estimée du contour de segmentation (40, 40'),
dans lequel
- chaque point du contour de segmentation (40, 40') est défini par deux composantes de coordonnées, dans lequel les deux composantes de coordonnées du contour de segmentation (40, 40') sont paramétrées de manière indépendante, et
- la représentation estimée comprend
- au moins un paramètre d'une transformation géométrique estimée par le système d'apprentissage automatique entraîné, et
- une représentation d'un contour de référence appartenant à une apparence type de l'objet estimée par le système d'apprentissage automatique entraîné.

2. Procédé selon la revendication 1, **caractérisé en ce que** la reconstruction du contour de segmentation (40, 40') est effectuée par les étapes
- générer une représentation ajustée par la combinaison de l'au moins un paramètre de la transformation géométrique avec le contour de référence, et reconstruire le contour de segmentation (40, 40') à partir de la représentation ajustée, ou
- reconstruire le contour de référence à partir de la représentation du contour de référence, et transformer le contour de référence reconstruit avec la transformation géométrique dans le contour de segmentation (40, 40').

3. Procédé selon la revendication 1 ou 2, **caractérisé en ce que** la transformation géométrique comprend une mise à l'échelle, une translation, une rotation et/ou une mise en miroir.

4. Procédé selon l'une des revendications précédentes, **caractérisé en ce que** la représentation du contour de segmentation (40, 40') est obtenue par une transformée de Fourier, et la représentation estimée comprend un descripteur de Fourier estimé par le système d'apprentissage automatique entraîné, et la reconstruction du contour de segmentation (40, 40') comprend l'application d'une transformée de Fourier inverse au descripteur de Fourier.

5. Procédé selon la revendication 4, **caractérisé en ce que** le descripteur de Fourier est un descripteur de Fourier elliptique.

6. Procédé selon l'une des revendications précédentes, **caractérisé en ce qu'**il comprend en outre la génération d'une étiquette d'identification pour chaque contour de segmentation (40, 40') par le système d'apprentissage automatique entraîné.

7. Procédé selon la revendication 6, **caractérisé en ce que**, pour la gestion d'occlusion, une valeur de score de visibilité est générée par le système d'apprentissage automatique entraîné pour la représentation de chaque contour de segmentation (40, 40'), dans lequel la valeur de score de visibilité indique si des objets ou des parties d'objet sont visibles, cachés ou occlus ; et le contour de segmentation (40, 40') est reconstruit uniquement pour des représentations présentant une valeur de score de visibilité indiquant une visibilité de l'objet.

8. Procédé selon la revendication 7, **caractérisé en ce que**, en cas d'occlusion, la même étiquette d'identification est attribuée à des contours de segmentation (40, 40') qui appartiennent au même objet.

9. Procédé selon l'une des revendications précédentes, **caractérisé en ce que** le système d'apprentissage automatique entraîné comprend un réseau neuronal.

10. Procédé selon la revendication 9, **caractérisé en ce que** le réseau neuronal est un réseau neuronal convolutif.

11. Système de traitement de données pour une segmentation d'objet dans une image (10), comprenant un système d'apprentissage automatique entraîné pour estimer une représentation d'un contour de segmentation (40, 40') d'un objet dans l'image (10), dans lequel le contour de segmentation (40, 40') est une courbe paramétrique bidimensionnelle fermée et le système de traitement de données est adapté pour
- entrer l'image (10) à segmenter dans le système d'apprentissage automatique entraîné, **caractérisé en ce que** le système de traitement de données est en outre adapté pour
- reconstruire le contour de segmentation (40, 40') de l'objet présentant des contours quelconques, y compris des contours de forme concave, à partir de la représentation estimée du contour de segmentation (40, 40'), dans lequel
- chaque point du contour de segmentation (40, 40') est défini par deux composantes de coordonnées, dans lequel les deux composantes de coordonnées du contour de segmentation (40, 40') sont paramétrées de manière indépendante, et
- la représentation estimée comprend
- au moins un paramètre d'une transformation géométrique estimée par le système d'apprentissage automatique entraîné, et
- une représentation d'un contour de référence appartenant à une apparence type de l'objet estimée par le système d'apprentissage automatique entraîné.

12. Produit programme informatique non transitoire comprenant des instructions qui, lorsque le programme est exécuté par un ordinateur, amènent l'ordinateur à effectuer le procédé selon l'une des revendications 1 à 10.

13. Support non transitoire lisible par ordinateur comprenant des instructions qui, lorsqu'elles sont exécutées par un ordinateur, amènent l'ordinateur à effectuer le procédé selon l'une des revendications 1 à 10.
